# EUROPEAN PATENT APPLICATION

(11) **EP 0 781 803 A1**
(43) Date of publication of application: **02.07.1997**
(21) Application number: 96309447.9
(22) Date of filing: 23.12.1996
(51) Int. Cl.: C08K 5/524, C08K 5/06, C08L 23/02

(54) **Stabilized thermoplastic polymer compositions**

(30) Priority: 29.12.1995 US 578155; 20.02.1996 US 603517
(71) Applicant: GENERAL ELECTRIC COMPANY, Schenectady, NY 12345 (US)
(72) Inventor: Avakian, Roger W., Parkersburg, West Virginia 26010 (US); Ashton, Henry Christopher, Harris, Texas 77339 (US); Wright, William E., Baton Rouge, Louisiana 70820 (US); Towles, Thomas W., Baton Rouge, Louisiana 70809 (US)
(74) Representative: Szary, Anne Catherine, Dr.

(57) **Abstract**

A thermoplastic polymer composition includes a polyolefin polymer, a phosphorus-containing antioxidant compound, and a co-additive that includes one or more of (i) a polyalkylene glycol, (ii) a polyalkylene oxide, and (iii) a sterically hindered amine compound. Also disclosed are methods for preparing such polymers as well as methods for hindering the oxidative degradation and the rate of antioxidant consumption of such polymers.

## Description

The present invention relates to stabilized thermoplastic polymer compositions. More particularly, the invention relates to polyolefin polymers containing, for example, phosphite antioxidants wherein polyalkylene glycols or the like are added to stabilize said phosphite antioxidants. In addition, the invention relates to methods for stabilizing such polymers as well as methods for hindering the oxidative degradation and the rate of antioxidant consumption in such polymers.

### Description of the Related Art

It is well known in the art to produce polymers, such as polyethylene polymers including high density polyethylene polymers (HDPE). These may be made using chromium or Ziegler-Natta type catalysts by methods well known in the art as described in, e.g., U.S. Patent No. 4,857,257. It is also known that HDPE polymers are subject to oxidative degradation in the presence of atmospheric oxygen. In order to resist such degradation, phosphorus-containing compounds such as organic phosphites are frequently used by those skilled in the art in order to stabilize the polymers against the oxidative degradation which is caused by light and/or heat in the presence of atmospheric oxygen.

One particularly important property of phosphites is that they suppress color formation during HDPE processing. Their mode of action includes reaction with hydroperoxides that form through oxidation of the polymer. For example, in the oxidation of polyolefins, alkyl hydroperoxides form through a sequence of reactions involving the intermediate formation of free radicals. The alkyl hydroperoxides then attack more polymer chains to produce still more free radicals thus leading to further degradation of the polymer. Phosphites are particularly effective in decomposing hydroperoxides, thus terminating the chain reactions. Such organic phosphites are disclosed in U.S. Patent Nos. 3,516,963 and 4,305,866. Unfortunately, these phosphites are themselves subject to undergo degradation during storage conditions.

Moreover, phosphites are very reactive with water and oxygen and can decompose to yield products that are ineffective in suppressing degradation. In this process they are converted into inactive compounds and are then no longer effective as antioxidants. The stability of phosphites appears to be even poorer in the presence of chromium and therefore residual chromium in HDPE produced with chromium catalysts can accelerate the phosphite degradation.

Even after phosphites have been compounded into pelletized HDPE resin, their reactivity with moisture and oxygen can lead to their decomposition into nonuseful products. To preserve the usefulness of phosphites as polymer stabilizers, it is clear that these phosphites should be protected from premature reaction with atmospheric moisture and oxygen during storage. One solution to this problem has been proposed by U.S. Patent No. 5,326,803, which suggests coating the phosphite with a dialkoxy or diphenoxy substituted silicone. U.S. Patent No. 4,290,941 suggests a combination of a phosphite and a hindered phenolic antioxidant. All of the foregoing patents are incorporated herein by reference.

In high density polyethylenes, it is often beneficial to use cycloalkyldiphosphites, to achieve good natural color and to provide the polymer with superior processing properties. However, under severe storage conditions of warm moist air, major losses of the phosphite occur over several weeks. This causes a significant loss of performance when the resin is used to produce finished goods such as rigid containers or films.

It has now been found that polymers such as polyalkylene polymers may be stabilized against oxidative degeneration through the addition of a dicycloalkyldiphosphite and a polyalkylene glycol. The polyalkylene glycol additive significantly increases phosphite retention. This may be effectively achieved by adding a small amount of a polyalkylene glycol to the phosphite containing polymer during pelletization of the polyalkylene polymer.

Previously, polyalkylene glycols have been added to polymers as antistatic agents. However, for such use, they must be employed at relatively high concentrations, e.g., 800 - 2000 ppm. The unexpected effectiveness of polyalkylene glycols as phosphite stabilizers at concentrations well below the levels at which they are added to polymers for antistatic purposes is therefore quite surprising. The low levels employed when the polyalkylene glycols are used as phosphite stabilizers also obviates the often unwanted side effects sometimes observed when these additives are used as antistatic agents in polymers. Polyalkylene glycols employed as antistatic agents must be present in polymers at high levels, otherwise no significant antistatic properties are imparted to the polymer. Thus, their use at low levels for the purpose of suppressing phosphite degradation is unexpected in the art of preparing polymer additives.

In addition, while it is known to formulate polyolefin polymers with phosphorus-containing antioxidant-stabilizer additives, e.g., phosphites, phosphonites, etc., to improve and preserve the properties of the polymer, it has been observed that silica-containing polyolefin polymers that are stabilized with phosphorus-containing additives exhibit a relatively rapid decrease in the amount of phosphorus-containing additive under conditions of elevated temperature and high relative humidity. The rapid disappearance of the phosphorus-containing additive has given rise to a concern that the long term stability of phosphorus-containing additive stabilized polyolefin polymers compositions with respect to, e.g., melt index, may be compromised. What is needed is a technique by which the rate of disappearance of the phosphorus compound from the polyolefin polymer composition is slowed, without detrimentally affecting other properties, e.g., color, of the polyolefin polymer composition.

### Summary of the Invention

The present invention discloses a polymer composition which comprises
(a) a polyolefin subject to oxidative degradation in the presence of atmospheric oxygen;
(b) at least one phosphite compound present in an amount sufficient to hinder the oxidative degradation of the polyolefin; and
(c) at least one polyalkylene glycol which is present in an amount sufficient to hinder the hydrolysis of the phosphite.

In another embodiment of the invention, said polyolefin may be replaced in the composition by at least one styrenic polymer, polycarbonate, polypropylene oxide or polyester which is subject to oxidative degradation in the presence of atmospheric oxygen.

The invention further provides a method of hindering the oxidative degradation of a polyolefin by forming a melt of the polyolefin and adding thereto at least one phosphite compound in an amount sufficient to hinder the oxidative degradation of the polyolefin and at least one polyalkylene glycol in an amount sufficient to hinder the hydrolysis of the phosphite.

The invention still further provides a method for suppressing the loss of a phosphite antioxidant when it is blended as a stabilizer in a mixture with at least one polymer which comprises adding to the mixture at least one polyalkylene glycol in an amount sufficient to hinder the hydrolysis of the phosphite.

The invention also provides an additive composition capable of hindering the oxidative degradation of a polymer composition which is subject to oxidative degradation in the presence of atmospheric oxygen which comprises:
(a) at least one hindered phenol antioxidant;
(b) at least one phosphite; and
(c) at least one polyalkylene glycol
wherein the hindered phenol, the phosphite and the polyalkylene glycol are combined in sufficient proportions such that when a sufficient amount of the additive composition is added to a polymer composition, the oxidative degradation is hindered.

In another embodiment of the invention, polymers other than polyolefins may be stabilized, such as styrenics, for example ABS, polystyrene and styrene-butadiene; polycarbonates; polypropylene oxides and polyesters, such as polyethylene terephthalate and polybutylene terephthalate.

In a preferred embodiment, the present invention is directed to thermoplastic polymer compositions consisting essentially of:
a polyolefin polymer;
silica;
a phosphorus-containing antioxidant compound; and
a co-additive, said co-additive comprising one or more of (i) a polyalkylene glycol having a number average molecular weight of greater than or equal to 3,000, (ii) a polyalkylene oxide, (iii) a sterically hindered amine compound.

The thermoplastic polymer compositions of the present invention exhibit low color and a substantial decrease, relative to analogous compositions that lack the co-additive of the composition of the present invention, in the rate at which the phosphorus-containing antioxidant compound is consumed, i.e., disappears, from the composition, particularly under conditions of elevated temperature, high relative humidity or elevated temperature and high relative humidity.

Another aspect of the present invention is directed to a method for decreasing the rate of consumption of a phosphorus-containing antioxidant compound in a polyolefin polymer composition, wherein said polyolefin polymer composition initially comprises the phosphorus-containing antioxidant compound and silica, comprising: adding a co-additive to the polymer composition, said co-additive comprising one or more of: (i) a polyalkylene glycol having a number average molecular weight of greater than or equal to 3,000, (ii) a polyalkylene oxide, (iii) a sterically hindered amine compound, to the polyolefin polymer composition.

### Detailed Description of the Invention

Polyolefin polymers and methods of making polyolefin polymers are well known in the art. Suitable polyolefin polymers include polyolefin homopolymers, such as, e.g., polyethylene, polypropylene, polyisobutylene, and polyolefin copolymers such as, e.g., poly(ethylene-propylene) copolymer, poly(ethylene-butylene) copolymer as well as blends thereof. In a preferred embodiment, the polyolefin polymer is a high density polyethylene polymer, i.e., a high density polyethylene homopolymer or a high density polyethylene copolymer.

Suitable high density polyethylene polymers are made, e.g., by a process wherein ethylene is polymerized in a slurry system at low pressure (2 to 4 megaPascals (MPa)) and moderate temperature (90 to 150°C) in a low boiling hydrocarbon , e.g., isobutane or isopentane, the presence of a catalyst that includes chromium in the Cr(VI) state and a powdered substrate of high surface area, e.g., porous amorphous silica. A chromium compound and silica are mixed together and heated in a stream of dry air to activate the catalyst. Homopolymerization using the chromium catalyzed process produces a polymethylene or very high molecular weight α-olefin. Typical homopolymer made by the chromium catalyzed process has a weight average molecular weight of about 40,000 to about 1,000,000, a melt index, as measured by ASTM Method D 1238-5T, of from 0.01 grams to 20 grams per 10 minutes (g/10 min) at 190°C, a density of about 0.960 to about 0.965 grams per cubic centimeter (g/cm³) and a crystallinity of about 94%. High density polyethylene copolymers containing units derived from other olefin monomers, e.g., 1-butene, 1-hexene, 1-octene, typically exhibit weight average molecular weights of from about 20,000 to about 1,000,000, melt indexes in the range of about 0.1g to about 100 g/10 minutes and densities of from about 0.936 g/cm³ to about 0.96 g/cm³.

Suitable high density polyethylenes are commercially available from a number of commercial sources, including, e.g., Paxon Polymer Company, Phillips, Union Carbide and BASF.

The composition of the present invention may, optionally, further include one or more other polymers blended with the polyolefin polymer, e.g., a fluoropolymers added for the purpose of enhancing processability, at a level of up to about 500 parts by weight (pbw) of the other polymer per million pbw of the polyolefin polymer.

In a preferred embodiment, silica is present in the composition of the present invention at a level of from 20 ppm to 1000 ppm silica, based on the amount of polymer. The silica component may be introduced as a support for a polymerization reaction catalyst used in making the polymer. Typical catalyst compounds used for polymerization reactions include, e.g., chromium compounds, vanadium compounds, titanium compounds. Suitable silica supported chromium catalysts include, e.g., chromium trioxide/silica, chromocene/silica, hydrated chromium acetate/silica, bis(triphenyl silyl) chromate/silica. Typically, the silica catalyst support residue is present at a level of from 20 ppm to 500 ppm silica, based on the amount of polymer, i.e., parts by weight per one million parts by weight polymer.

Silica may also be introduced to the composition of the present invention, in the form of fumed silica, as an anti-block additive. Suitable anti-block additives are commercially available, e.g., from Cabot Corporation. The silica anti-block additives are typically used at a level of from 50 ppm to 1000 ppm silica, based on the amount of polymer.

While not wishing to be bound by theory, it is believed that silica present in prior art polymers is involved in the undesirably rapid disappearance of the phosphorus compound from the polymer, particularly when the polymers are exposed to conditions of elevated temperature, high relative humidity or elevated temperature and high relative humidity.

Phosphorus-containing compounds suitable for use as antioxidants and stabilizers in polymer compositions are well known in the art. Suitable phosphorus-containing antioxidant compounds include organo-phosphorus compounds, e.g., phosphites and phosphonites, such as, e.g., triphenyl phosphite, diphenylalkyl phosphites, phenyldialkyl phosphites, tris(nonylphenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, 2,2-ethylidene bis(4,6-di-tert-butylphenyl)fluorophosphite, bis(2,4-di-tert-butylphenyl)pentaerythritol diphosphite, tristearyl sorbitol triphosphite, (2,4,6-tri-tert-butylphenyl)(2-butyl-2-ethyl-1,3-propanediol)phosphite, 2,2',2"-nitrilo[triethyl-tris[3,3',5,5'-tetra-tert-butyl-1,1'-biphenyl-2-2'-diyl] phosphite and tetrakis(2,4-di-tert-butylphenyl)4,4'-biphenylene diphosphonite.

In a preferred embodiment, the phosphorus compound is a phosphite compound and, more preferably, is tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite.

The phosphorus compound is, at least initially, present in an amount effective to improve the oxidative stability of the polymer. In a preferred embodiment, the composition of the present invention includes from 100 ppm to 2000 ppm, more preferably from 200 ppm to 1500 ppm, and still more preferably from 500 ppm to 1000 ppm, of the phosphorus-containing compound, based on the amount of polymer.

In a preferred embodiment, the composition of the present invention includes a neutralizer compound for neutralizing catalyst residues and other acidic residues derived from the polymer production method. Suitable neutralizer compounds are known and include, e.g., alkali metal salts and alkaline earth metal salts of fatty acids such as, e.g., zinc stearate, calcium stearate, calcium lactate, calcium stearoyl lactylate, metal oxides such as, e.g., zinc oxide, magnesium oxide, and epoxidized soybean oil. Preferably, the neutralizer compound is zinc stearate and is present in an amount effective to improve the stability of the polymer. In a preferred embodiment the composition of the present invention includes from 5 ppm to 2500 ppm, more preferably from 200 ppm to 1000 ppm, of the neutralizer compound, based on the amount of polymer.

The composition of the present invention may also include a co-additive in an amount effective to decrease the rate of consumption of the phosphorus-containing antioxidant compound. Suitable co-additives include sterically hindered amines, polyalkylene glycols, polyalkylene oxides, and mixtures thereof.

Sterically hindered amines suitable for use as stabilizers in polymer compositions are known in the art. Suitable sterically hindered amines include, e.g., 1,4-diazobicyclo-2,2-octane, N,N,N',N'-tetramethyl hexamethylenediamine, triisopropanol amine, bis(2,2,4,6-tetramethyl-4-piperidyl)-sebacate, dodecyl-N-(2,2,4,6-tetramethyl-4-piperidinyl)-succinimide, 2,2,6,6-tetramethyl-4-piperidinol, imidazole, distearyl hydroxyl amine, polyethyleneimine, guanine, lysine, the reaction product of 2,4-dichloro-6-(4-morpholinyl)-1,3,5-triazine with a polymer of 1, 6-diamine, N, N'-Bis(-2, 2, 4, 6-tetramethyl-4-piperidenyl) hexane, poly[[6-[(1,1,3,3-tetramethylbutyl)amino-5-triazine-2,4-diyl][(2,2,6,6-tetramethyl-4-piperidyl)imino]hexamethylene[2,2,6,6-tetramethyl-4-piperidyl) imino]], dimethyl succinate polymer with 4-hydroxy-2,2,6,6-tetramethyl-1-piperidine ethanol, poly(oxy-1,2-ethanediyl, α-[3-[3-(2H-benzotriazol-2-yl)-5-(1,1-dimethylethyl)-4-hydroxyphenyl-1-oxopropoxly-Ω-[3-[3-(2H-benzotriazol-2-yl)-5-(1,1-dimethylethyl)-4-hydroxyphenyl]-1-oxopropoxy], polymethylpropyl-3-oxy-[4(2,2,6,6-tetramethyl) piperidinyl] siloxane.

In a particularly preferred embodiment, the sterically hindered amine is triisopropanol amine or the reaction product of 2,4-dichloro-6-(4-morpholinyl)-1, 3, 5-triazine with a polymer of 1, 6-diamine, N, N'-Bis(-2, 2, 4, 6-tetramethyl-4-piperidenyl) hexane in an amount ranging from 5 ppm to 200 ppm, more preferably from 10 to 100 ppm, and still more preferably from 25 ppm to 50 ppm of the sterically hindered amine, based on the amount of polymer.

Polyalkylene glycols, such as, e.g., polyethylene glycol, polypropylene glycol, and polyalkylene oxides, such as, e.g., polyethylene oxide, polypropylene oxide, are well known. The polyalkylene glycol of the present invention may be any polyalkylene glycol having a number average molecular weight ("Mₙ") of from equal to or greater than 3,000.

In a first preferred embodiment, the co-additive is a polyalkylene glycol having a Mₙ of greater than or equal to 6,000. In a second preferred embodiment, the co-additive is a polyalkylene glycol having a Mₙ of from 8,000 to 8,000,000. In a third preferred embodiment, the co-additive is a polyalkylene glycol having a Mₙ of from 15,000 to 8,000,000. In a fourth preferred embodiment, the co-additive is a polyalkylene oxide having a viscosity average molecular weight ("Mᵥ") of greater than 50,000.

The composition of the present invention preferably includes from 10 ppm to 500 ppm, more preferably from 25 ppm to 300 ppm, and still more preferably from 100 ppm to 300 ppm of the polyalkylene glycol or polyalkylene oxide, based on the amount of polymer.

In one embodiment of the present invention, the co-additive includes a polyalkylene glycol and a polyalkylene oxide. In a preferred embodiment, the composition of the present invention includes from 10 ppm to 500 ppm, more preferably from 25 ppm to 300 ppm, and still more preferably from 100 ppm to 300 ppm of the polyalkylene glycol and from 10 ppm to 500 ppm, more preferably from 25 ppm to 300 ppm, and still more preferably from 100 ppm to 300 ppm of the polyalkylene oxide, based on the amount of polymer.

In another embodiment of the present invention, the co-additive includes a sterically hindered amine and a polyalkylene glycol or a polyalkylene oxide. In a preferred embodiment, the composition of the present invention includes from 5 ppm to 200 ppm, more preferably from 10 to 100 ppm, and still more preferably from 25 ppm to 50 ppm of the sterically hindered amine and from 10 ppm to 500 ppm, more preferably from 25 ppm to 300 ppm, and still more preferably from 100 ppm to 300 ppm of the polyalkylene glycol or polyalkylene oxide, based on the amount of polymer.

In a further embodiment of the present invention, the co-additive includes a sterically hindered amine, polyalkylene glycol and a polyalkylene oxide. In a preferred embodiment, the composition of the present invention includes from 5 ppm to 200 ppm, more preferably from 10 to 100 ppm, and still more preferably from 25 ppm to 50 ppm of the sterically hindered amine, from 10 ppm to 500 ppm, more preferably from 25 ppm to 300 ppm and still more preferably from 100 ppm to 300 ppm of the polyalkylene glycol and from 10 ppm to 500 ppm, more preferably from 25 ppm to 300 ppm, and still more preferably from 100 ppm to 300 ppm of the polyalkylene oxide, based on the amount of polymer.

The stabilized thermoplastic polymer compositions of the invention may optionally also contain various conventional additives, such as (1) antioxidants, such as, e.g., alkylated monophenols, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, amides of beta-(3,5-di-tert-butyl-4-hydroxyphenol)-propionic acid; (2) UV absorbers and light stabilizers such as, e.g., (i) 2-(2'-hydroxyphenyl)-benzotriazoles, 2-Hydroxybenzophenones; (ii) esters of substituted and unsubstituted benzoic acids, (iii) acrylates, (iv) nickel compounds; (3) metal deactivators, such as, e.g., N,N'-diphenyloxalic acid diamide, 3-salicyloylamino-1,2,4-triazole; (4) peroxide scavengers, such as, e.g., (C₁₀-C₂₀)alkyl esters of β-thiodipropionic acid, mercapto benzimidazole;(5) polyamide stabilizers; (6) basic co-stabilizers, such as, e.g., melamine, polyvinylpyrrolidone, triallyl cyanurate; urea derivatives, hydrazine derivatives; amines, polyamides, polyurethanes; (7) nucleating agents; such as, e.g., adipic acid; (8) fillers and reinforcing agents, such as, e.g., silicates, glass fibers, carbon black, graphite; and (9) other additives such as, e.g., plasticizers, optical brighteners; flameproofing agents; anti-static agents; blowing agents.

The composition of the present invention is made by combining and mixing, preferably melt mixing, the components of the composition. In a preferred embodiment, the components are combined and mechanically mixed, the mixture so formed is then fed to an extruder and extruded and the extrudate is then pelletized.

The composition of the present invention is useful as a molding or extruding material in applications for which known polyolefin polymers are typically used, e.g., extruded pipe, containers, films, and is particularly well suited for applications wherein exposure to conditions of elevated temperature and/or high relative humidity is anticipated.

The following examples which are illustrative and not exclusive, and show the effectiveness of the polyalkylene glycol additives used in this invention to protect phosphite antioxidants from premature decomposition. In the examples, it can be seen that antistatic agents with a structural representation similar to polyalkylene glycols are not effective in suppressing phosphite degradation. For example, glycerol monostearate has hydroxyl groups and an aliphatic chain but is not effective in suppressing phosphite degradation.

### EXAMPLE 1

One kilogram samples of high density polyethylene powder (MI22 = 3.7 g/10 min; density = 0.953 g/cc) was thoroughly mixed with 0.50 g of Irganox 1010", a hindered phenol antioxidant which is tetrakis methylene (3,5-di-tert-butyl-4-hydroxy hydrocinnamate)] methane available commercially from the Ciba Additives Division of Ciba-Geigy; 1.00 g of bis(2,4-di-tert-butyl-phenyl) pentaerythritol diphosphite available as Ultranox U626 from GE Specialty Chemicals and .40 g of zinc stearate in a large nitrogen filled polyethylene bag. In control run R1-1, no polyethylene glycol is added. In the next runs varying amounts of different polyethylene glycols were also added. Run R1-2 adds the polyethylene glycol Carbowax 400 at 400 ppm; run R1-3 adds Carbowax 400 at 800 ppm; run R1-4 adds the polyethylene glycol PEG 8000 at 400 ppm and run R1-5 adds PEG 8000 at 400 ppm. As a comparison, small amounts of an antistatic compound, Pationic^{R} 901, glycerol monostearate were added to the control composition, without polyethylene glycol. Pationic^{R} 901 is commercially available from American Ingredients Company, Patco Polymer Additives Division, Kansas City, Missouri. Run R1-6 adds Pationic^{R} 901 at 400 ppm and run R1-7 adds Pationic^{R} 901 at 800 ppm. These latter two runs were done to demonstrate that the addition of a type of antistatic agent will not work like the polyethylene glycols. The sample mixtures were then subjected to three consecutive extrusions at 230 °C using a 2.54 cm diameter Rheomex 259 single screw extruder 25:1 length to diameter ratio operating at 60 rpm. About 200 g of each of the pelletized extrudates were placed in liter beakers equipped with a loosely fitting lid and containing a large number of holes to allow easy ingress of hot moist air. The beakers were then placed in an oven which was kept at 60 °C (140 °F) and through which moist air was circulated continuously. 15 gram samples of the pellets were periodically removed from the beakers, analyzed and the concentration of Ultranox 626 phosphite recorded. The results are shown in Table 1.

**TABLE 1**

| EFFECT OF ADDING POLYETHYLENE GLYCOLS ON RETENTION OF PHOSPHITE IN HDPE | | | | | |
|---|---|---|---|---|---|
| Stabilizer Phosphite (ppm) | | | Stabilizer Concentration (ppm) | U626 Measured After Day | |
| | | Run | | 0 | 17 |
| 28 | | | | | |
| | Control | R1-1 | --- | 557 | 0 |
| | 0 | | | | |
| | Carbowax 400 | R1-2 | 400 | 557 | 528 |
| | 520 | | | | |
| | Carbowax 400 | R1-3 | 800 | 676 | 693 |
| | 669 | | | | |
| | PEG 8000 | R1-4 | 400 | 584 | 581 |
| | 546 | | | | |
| | PEG 8000 | R1-5 | 800 | 699 | 681 |
| | 641 | | | | |
| | Pationic 901 | R1-6 | 400 | 594 | 490 |
| | 275 | | | | |
| | Pationic 901 | R1-7 | 800 | 560 | 429 |
| | 167 | | | | |

### EXAMPLE 2

The procedure described in Example 1 was followed except the HDPE used in compounding the sample is another HDPE powder (density = 0.955 g/cc; MI₂ = 0.4 g/10 min.) widely used in blowmolding household, industrial and chemical bottles. The results for various sample runs are shown in Table 2.

**TABLE 2**

| EFFECT OF POLYETHYLENE GLYCOL STABILIZERS ON PHOSPHITES IN PELLETIZED HDPE | | | | | | |
|---|---|---|---|---|---|---|
| Stabilizer Phosphite (ppm) | | | Stabilizer Concentration (ppm) | U626 Measured After Day | | |
| | | Run | | 0 | 14 | 28 |
| | 66 | | | | | |
| | Control | R2-1 | ---- | 791 | 650 | 591 |
| | 283 | | | | | |
| | Control | R2-2 | ---- | 809 | 762 | 702 |
| | 371 | | | | | |
| 10 | Carbowax 400 | R2-3 | 400 | 938 | 812 | 829 |
| | 792 | | | | | |
| | Carbowax 400 | R2-4 | 800 | 849 | 819 | 825 |
| | 809 | | | | | |
| | PEG 8000 | R2-5 | 400 | 844 | 820 | 819 |
| | 758 | | | | | |
| | PEG 8000 | R2-6 | 800 | 786 | 800 | 795 |
| | 753 | | | | | |
| | Pationic 901 | R2-7 | 400 | 802 | 764 | 748 |
| | 514 | | | | | |
| **15** | Pationic 901 | R2-8 | 800 | 772 | 717 | 644 |
| | 308 | | | | | |

### EXAMPLE 3

The procedure described in Example 1 was followed except a different HDPE (MI₂₂ = 2.0 g/10 min. and Density = 0.953 g/cc) was used. The results for the various runs are shown in Table 3.

**TABLE 3**

| EFFECT OF STABILIZERS ON PHOSPHITES IN PELLETIZED HDPE | | | | | |
|---|---|---|---|---|---|
| | Stabilizer | | Stabilizer Concentration (ppm) | U626 Phosphite Measured (ppm) After Day | |
| | | Run | | 0 | 18 |
| | Control | R3-1 | ----- | 531 | 0 |
| | Control | R3-2 | ----- | 597 | 309 |
| 10 | Carbowax 400 | R3-3 | 400 | 666 | 707 |
| | Carbowax 400 | R3-4 | 800 | 642 | 766 |
| | PEG 8000 | R3-5 | 400 | 661 | 747 |
| | PEG 8000 | R3-6 | 800 | 613 | 703 |
| | Pationic 901 | R3-7 | 400 | 661 | 747 |
| | Pationic 901 | R3-8 | 800 | 609 | 110 |

### EXAMPLE 4

The procedure described in Example 1 was followed except a different HDPE (MI₂ = 0.4 g/10 min; Density 0.945 g/cc.) was used. The results for the various runs are shown in Table 4.

**TABLE 4**

| EFFECT OF STABILIZERS ON PHOSPHITES IN PELLETIZED HDPE | | | | | |
|---|---|---|---|---|---|
| Stabilizer Phosphite (ppm) | | | Stabilizer Concentration (ppm) | U626 Measured After | |
| Day | | | | | |
| | | Run | | 0 | 14 |
| | Control | R4-1 | ----- | 607 | 329 |
| | Control | R4-2 | ----- | 625 | 576 |
| | Carbowax | R4-3 | 400 | 633 | 610 |
| | Carbowax | R4-4 | 800 | 627 | 589 |
| | PEG 8000 | R4-5 | 400 | 631 | 623 |
| | PEG 8000 | R4-6 | 800 | 636 | 582 |
| | Pationic 901 | R4-7 | 400 | 596 | 495 |
| | Pationic 901 | R4-8 | 800 | 716 | 462 |

### EXAMPLE 5

The procedure described in Example 1 is followed but a different HDPE powder (density = 0.953, melt index (MI₂₂) = 6.0 decigrams per minute) is used. This HDPE is typically used for blow molding large parts. One kilogram samples are pelletized as described in Example 1. Sample 1 is the pelletized product obtained after adding an additive package containing 0.5 g of Irganox 1010 with 1.0 g of Ultranox U-626 and 0.4 g zinc stearate. Samples 2, 3 and 4 are prepared in the same way, but various amounts of polyethylene glycol (Carbowax 400) are added along with the components used in Sample 1. To Sample 2 is added 200 ppm Carbowax 400. To Sample 3 is added 400 ppm Carbowax 400. To Sample 4 is added 800 ppm Carbowax 400. The four pelletized products are then subjected to storage at 140° C in the presence of moist air for about three months. Samples are removed periodically and analyzed for U-626. The results are shown in Table 5:

**TABLE 5**

| | Carbowax 400 (ppm) | U626 Phosphite Measured (ppm) After Day | | | | | |
|---|---|---|---|---|---|---|---|
| | | 0 | 7 | 14 | 22 | 46 | 88 |
| Sample 1 | 0 | 0 | 520 | 470 | 340 | 110 | 0 |
| Sample 2 | 200 | 620 | 600 | 540 | 510 | 550 | 360 |
| Sample 3 | 400 | 560 | 570 | 540 | 540 | 550 | 390 |
| Sample 4 | 800 | 600 | 590 | 530 | 510 | *560* | 390 |

This example shows the dramatic phosphite retention achieved when polyethylene glycol is added to Samples 2, 3 and 4 compared to control Sample 1 without polyethylene glycol.

In each of the above examples 1,000 ppm of the phosphite are blended with the other composition ingredients. Some of the phosphite is consumed in the compounding process and converted into byproducts. The amount of phosphite measured on day 0 for each test is the amount remaining after compounding.

The results from the above examples demonstrate that polyalkylene glycols are effective in suppressing the degradation of phosphites which are used as antioxidants in pelletized polyolefins such as high density polyethylene (HDPE). Within the limits of analytical measurement error, the trends indicate the effectiveness of polyalkylene glycols as phosphite stabilizers. Consequently, the desirable properties of the phosphite, namely, suppressing color formation and stabilizing melt flow during subsequent processing are retained. The examples also demonstrate that the antistatic agent Pationic 901 generally is less, or not as effective as the polyethylene glycols Carbowax 400 and PEG 8000.

### EXAMPLES 6-19

The following materials were used to make the thermoplastic polymer compositions of Examples 6-19:
- "HDPE":: FA 53-035 high density polyethylene, melt index (high load) of about 6 g/10 min (Paxon Polymer Company);
- "Phosphite":: Bis(2,4-di-t-butyl)pentaerythritol diphosphite ULTRANOX™ 626 antioxidant (GE Specialty Chemicals, Inc.);
- "Antioxidant":: Polyphenol antioxidant, tetrakis(methylene (3, 5-di-t-butyl-4-hydroxyhydrocinnamate, IRGANOX ™ 1010 antioxidant (Ciba-Geigy);
- "Amine":: reaction product of 2,4-dichloro-6-(4-morpholinyl)-1, 3, 5-triazine with a polymer of 1, 6-diamine, N, N'-Bis(-2, 2, 4, 6-tetramethyl-4-piperidenyl) hexane, CYASORB™3346 LD light stabilizer, (Cytec);
- "Neutralizer": zinc stearate;
- "PEG 3350":: CARBOWAX™ 3350 polyethylene glycol, Mₙ = 3350 (Union Carbide Company);
- "PEG 8000":: PLURACOL™ E800 polyethylene glycol, Mₙ = 8000 (BASF);
- "PEG 20000":: POLYGLYKOL™ 20000S polyethylene glycol, Mₙ = 20,000 (Hoechst);
- "PEG Distearate":: Polyethylene glycol 400 Distearate (Aldrich);
- "PEG Methyl Ether":: Polyethylene glycol 750 Methyl Ether (Aldrich)
- "PE Oxide": Polyethylene oxide, Mᵥ = 100,000 (Aldrich)
- "TIPA": triisopropanol amine (Aldrich)

The compositions of Examples 6-19 were each made by combining the respective components in a single screw extruder and pelletized. Each of the compositions of Examples 6-19 included 100 pbw HDPE, 1000 ppm Phosphite and 500 ppm Antioxidant. The Neutralizer, Amine, PE Oxide, PEG 3350, PEG 8000, PEG 20000, PEG distearate, PEG methyl ether and TIPA were added to the respective compositions in the amounts set forth below in TABLE 6.

**TABLE 6**

| **EX#** | **Neutralizer** | **PEG 8000** | **PEG 20000** | **Amine** | **PE Oxide** |
|---|---|---|---|---|---|
| 6 | 400 | 50 | -- | -- | -- |
| 7 | 400 | 100 | -- | -- | -- |
| 8 | 400 | 200 | -- | -- | -- |
| 9 | 400 | -- | -- | -- | -- |
| 10 | 400 | -- | 100 | -- | -- |
| 11 | -- | -- | 200 | -- | -- |
| 12 | 400 | -- | 200 | -- | -- |
| 13 | 400 | -- | -- | 100 | -- |
| 14 | 400 | -- | -- | 50 | -- |
| 15 | 400 | -- | -- | -- | 200 |

| **EX#** | **Neutralizer** | **PEG Distearate** | **PEG Methyl Ether** | **PEG 3350** | **TIPA** |
|---|---|---|---|---|---|
| 16 | 400 | 200 | -- | -- | -- |
| 17 | 400 | -- | 200 | -- | -- |
| 18 | 400 | -- | -- | 200 | -- |
| 19 | 400 | -- | -- | -- | 200 |

The color of each of the compositions of Examples 6-19 was determined as Hunter YI color index (yellowness, as measured using the Hunter YI scale) . A lower Hunter YI color index number indicates lower color, with results of 0.0 or lower being preferred and results in the range of about -0.1 being highly preferred. Each of the compositions was subjected to aging at 60°C and 85-100% relative humidity ("RH") and the phosphite level of each of the compositions was monitored by Fourier transform infrared spectroscopy (FTIR).

Test results for each of the compositions of Examples 6-19 are set forth below in TABLE 7 as Hunter YI color index ("Color") and phosphite level ("Phosphite (ppm)") at room temperature ("RT") and under humid, i.e., 60°C and 85-100% RH, conditions ("HUMID") versus aging time ("t (days)").

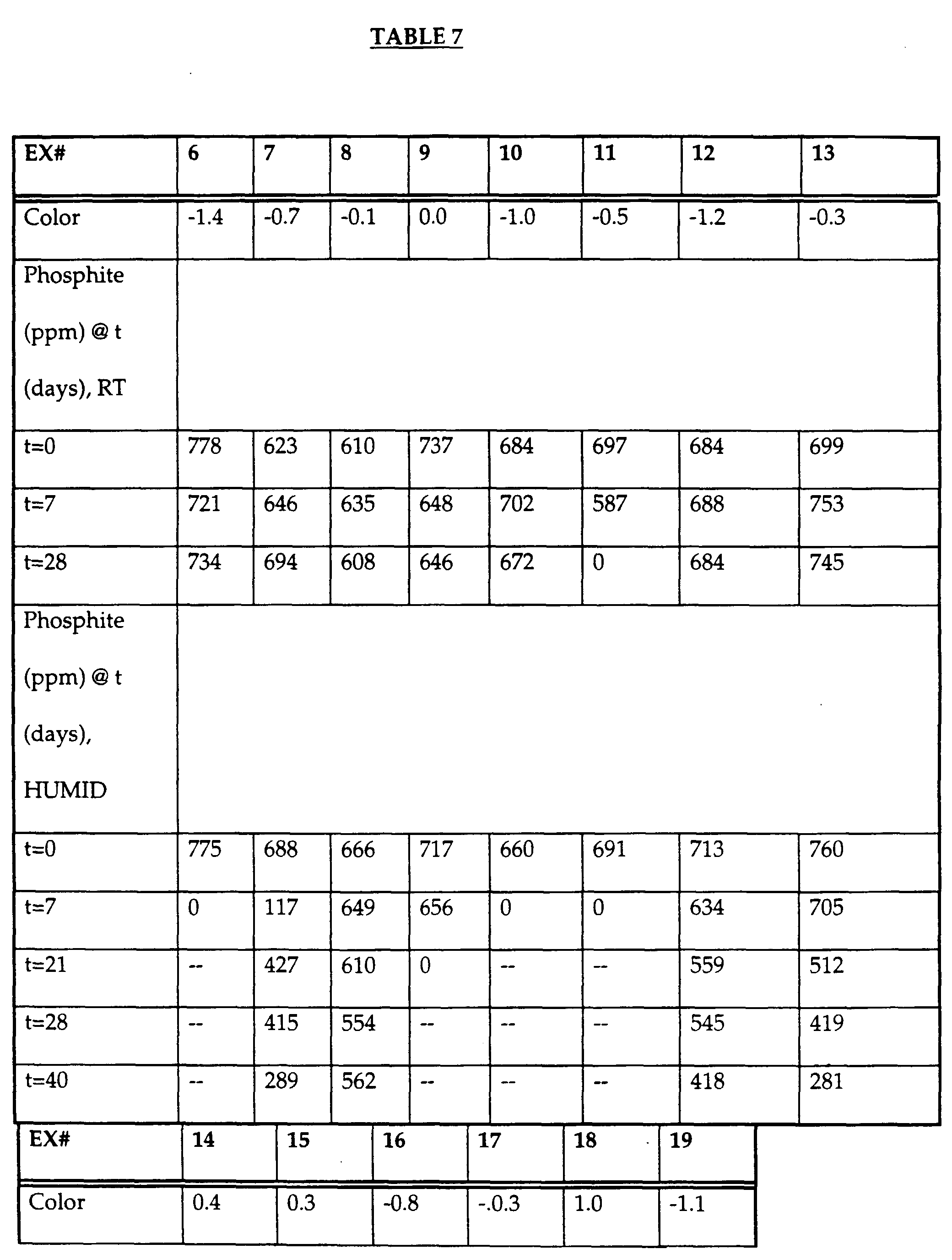

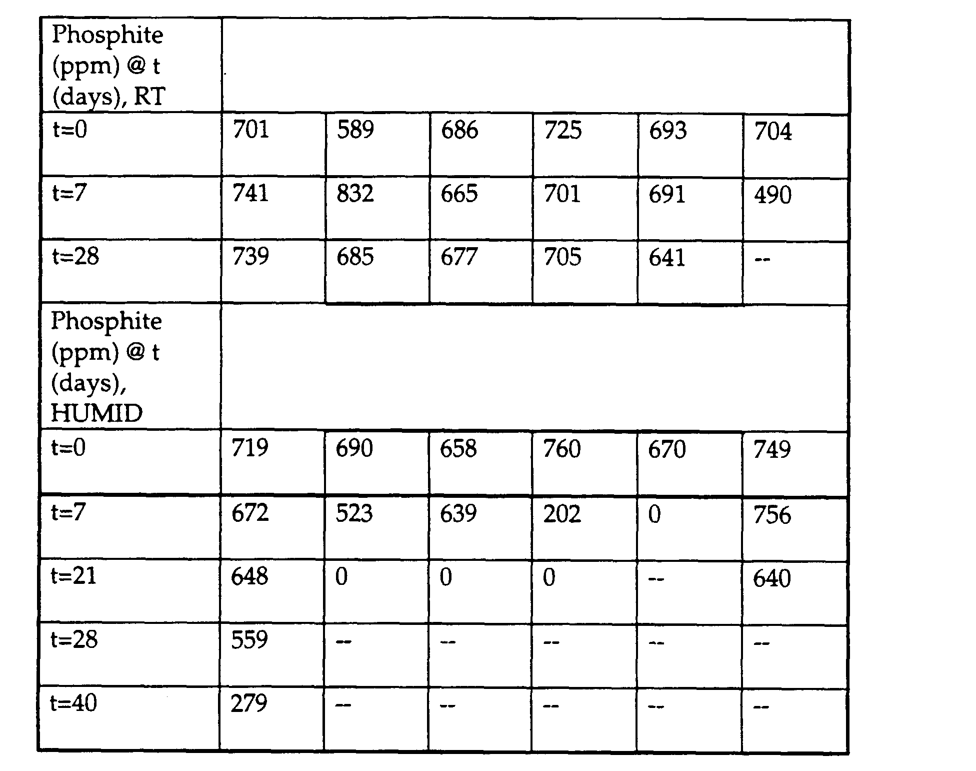

The thermoplastic polymer composition of the present invention exhibits advantageously low color and exhibits a substantial decrease, relative to analogous compositions that lack the co-additive of the composition of the present invention, in the rate at which the phosphorus-containing antioxidant compound disappears from the composition, particularly under conditions of conditions of elevated temperature, high relative humidity or elevated temperature and high relative humidity.

## Claims

1. A polymer composition which comprises
(a) a polyolefin subject to oxidative degradation in the presence of atmospheric oxygen;
(b) at least one phosphite compound present in an amount sufficient to hinder the oxidative degradation of the polyolefin; and
(c) at least one polyalkylene glycol which is present in an amount sufficient to hinder the hydrolysis of the phosphite.

2. The composition of claim 1, wherein the phosphite is a dicycloalkyldiphosphite or bis (2,4-di-tert-butylphenyl) pentaerythritol diphosphite.

3. The composition of claim 1, wherein the polyalkylene glycol is a polyethylene glycol with weight average molecular weight ranging from about 200 to about 10,000 and wherein the polyalkylene glycol component is present in an amount of from about 0.01% to about 0.3% by weight of the polyolefin.

4. The composition of claim 1 wherein the polyolefin is a polyethylene homopolymer or a polyethylene copolymer; wherein the phosphite is a 5 dicycloalkyldiphosphite or bis (2, 4-di-tertbutylphenyl) pentaerythritol diphosphite, which is present in an amount of from about 0.005% to about 5% by weight based on the weight of the polymer; and wherein the polyalkylene glycol is a polyethylene glycol with a molecular weight ranging from about 200 to about 10,000, and wherein the polyethylene glycol is present in an amount of from about 0.01% to about 0.3% by weight based on the weight of the polymer.

5. A method of hindering the oxidative degradation of a polyolefin subject to oxidative degradation in the presence of atmospheric oxygen, which comprises combining the polyolefin with at least one phosphite compound in an amount sufficient to hinder the oxidative degradation of the polyolefin and at least one polyalkylene glycol in an amount sufficient to hinder the hydrolysis of the phosphite.

6. An artide which comprises a polymer composition comprising:
(a) a polyolefin subject to oxidative degradation in the presence of atmospheric oxygen;
(b) at least one phosphite compound present in an amount sufficient to hinder the oxidative degradation of the polyolefin; and
(c) at least one polyalkylene glycol which is present in an amount sufficient to hinder the hydrolysis of the phosphite.

7. A method for suppressing the loss of a phosphite antioxidant when it is included as a stabilizer with at least one polymer which comprises adding to the polymer at least one polyalkylene oxide in an amount sufficient to hinder the hydrolysis of the phosphite.

8. A composition which comprises
(a) a polymer selected from the group consisting of at least one styrenic polymer, polycarbonate, polypropylene oxide, or polyester which is subject to oxidative degradation in the presence of atmospheric oxygen;.
(b) at least one phosphite which is present in an amount sufficient to hinder the oxidative degradation of the polymer; and
(c) at least one polyalkylene glycol which is present in an amount sufficient to hinder the hydrolysis of the phosphite.

9. An additive composition capable of hindering the oxidative degradation of a polymer composition which is subject to oxidative degradation in the presence of atmospheric oxygen which comprises:
(a) at least one hindered phenol antioxidant;
(b) at least one phosphite; and
(c) at least one polyalkylene glycol,
wherein the hindered phenol antioxidant, the phosphite and the polyalkylene glycol are combined in sufficient proportions such that when a sufficient amount of the additive composition is added to the polymer composition, the additive composition effectively hinders the oxidative degradation of the polymer composition when the polymer composition is in the presence of atmospheric oxygen.

10. The additive composition of claim 10, wherein the weight ratio of (a) to (b) ranges from about 0.004:1 to about 60:1 and the weight ratio of (b) to (c) ranges from about 0.066:1 to about 500:1.

11. A thermoplastic polymer composition comprising:
a polyolefin polymer;
silica;
a phosphorus-containing antioxidant compound; and
a co-additive, said co-additive comprising one or more of (i) a polyalkylene glycol having a number average molecular weight of greater than or equal to 3,000, (ii) a polyalkylene oxide, and (iii) a sterically hindered amine compound.

12. The composition of claim 11, wherein the composition comprises from 20 parts by weight to 1000 parts by weight silica per one million parts by weight polymer and wherein the composition comprises from 100 parts by weight to 2000 parts by weight of the phosphorus-containing antioxidant compound per one million parts by weight polymer and wherein the composition comprises from 10 parts by weight to 500 parts by weight of a polyalkylene glycol having a molecular weight of greater than or equal to 3,000 per one million parts by weight polymer and wherein the composition comprises from 10 parts by weight to 500 parts by weight of a polyalkylene oxide per one million parts by weight polymer and wherein the composition comprises from 5 parts by weight to 200 parts by weight of the sterically hindered amine compound per one million parts by weight polymer.

13. The composition of claim 11, wherein the composition comprises from 10 parts by weight to 500 parts by weight of the polyalkylene glycol or a polyalkylene oxide and from 5 parts by weight to 200 parts by weight of the sterically hindered amine compound, based on one million parts by weight polymer.

14. The composition of claim 11, wherein the phosphorus-containing antioxidant compound is tris(nonyl-phenyl)phosphite, (2,4,6-tri-tert-butylphenyl)(2-butyl-2-ethyl-1,3-propanediol)phosphite, bis(2,4-di-t-butylphenyl)pentaerythritol diphosphite, or distearyl pentaerythritol diphosphite, and
wherein the co-additive comprises a polyethylene glycol, a polypropylene glycol, a polyethylene oxide, a polypropylene oxide, triisopropanol amine or the reaction product of 2,4-dichloro-6-(4-morpholinyl)-1,3,5-triazine with a polymer of 1,6-diamine and N,N'-Bis(-2,2,4,6-tetramethyl-4-piperidenyl) hexane.

15. A method for decreasing the rate of consumption of a phosphorus-containing antioxidant compound in a polyolefin polymer composition, wherein said polyolefin polymer composition initially comprises the phosphorus-containing antioxidant compound and silica, comprising:
adding a co-additive to the polymer composition, said co-additive comprising one or more of: (i) a polyalkylene glycol having a number average molecular weight of greater than or equal to 3,000, (ii) a polyalkylene oxide, and (iii) a sterically hindered amine compound, to the polyolefin polymer composition.
